# EUROPÄISCHE PATENTSCHRIFT

(11) **EP 3 216 629 B1**
(45) Veröffentlichungstag und Bekanntmachung des Hinweises auf die Patenterteilung: **08.05.2019**
(21) Anmeldenummer: 17158688.6
(22) Anmeldetag: 01.03.2017
(51) Int. Cl.: B60C 27/06, B60C 27/08

(54) **GLEITSCHUTZVORRICHTUNG MIT SCHRÄG AUFLIEGENDER RUND- ODER PROFILSTAHLKETTE**
SLIP PROTECTION DEVICE WITH INCLINED CIRCULAR OR SECTIONAL STEEL CHAIN
DISPOSITIF ANTIDÉRAPANT AYANT UNE CHAÎNE EN ACIER PROFILÉ OU RONDE INCLINÉE

(30) Priorität: 09.03.2016 DE 202016101308 U
(43) Veröffentlichungstag der Anmeldung: 13.09.2017
(73) Patentinhaber: RUD Ketten Rieger & Dietz GmbH u. Co. KG, 73432 Aalen (DE)
(72) Erfinder: Grimm, Anton, 73479 Ellwangen (DE); Rieger, Johannes Werner, 73447 Oberkochen (DE)
(74) Vertreter: Grünecker Patent- und Rechtsanwälte PartG mbB

(56) Entgegenhaltungen:
- EP-A1- 1 327 537
- DE-C- 856 107
- US-A- 2 950 750

## Beschreibung

Die Erfindung betrifft eine Gleitschutzvorrichtung für Fahrzeugreifen, mit wenigstens einem Kettenstrang aus einer Profil- oder einer Rundstahlkette, wobei der Kettenstrang aus geraden Kettengliedern besteht und bei auf dem Fahrzeugreifen montierter Gleitschutzvorrichtung auf einer Oberfläche des Fahrzeugreifens aufliegt, und wobei der Kettenstrang bei auf dem Fahrzeugreifen montierter Gleitschutzvorrichtung an wenigstens einem seiner Enden in einer bezüglich der Oberfläche des Fahrzeugreifens Schragenkreuz-förmigen Vororientierung mittelbar oder unmittelbar mit wenigstens einem Verbindungsglied (40) in eine Knotenstelle (50) der übrigen Gleitschutzvorrichtung eingehängt ist.

Derartige Gleitschutzvorrichtungen sind bekannt. Sie werden beispielsweise als Schnee-, Forst- oder Schlammketten eingesetzt. Bei den bekannten Gleitschutzvorrichtungen, wie sie in der DE 1 960 198 U1, der DE 1 027 540 A1 und der DE 32 12 364 gezeigt sind, wechseln sich Kettenglieder mit parallel zur Lauffläche angeordneter Kettengliedebene, sogenannte "liegende" Kettenglieder, mit "stehenden" Kettengliedern ab, deren Kettengliedebene senkrecht zur Lauffläche ausgerichtet ist. Der Nachteil dieser Laufketten ist der ungleichmäßige Verschleiß nur der stehenden Kettenglieder, selbst bei gewendeter Gleitschutzvorrichtung.

Um diesem konzentrierten Verschließ zu begegnen, werden, wie in der DE 1 027 540 A1 gezeigt, zusätzliche Rollenelemente verwendet. Problematisch ist allerdings, dass für die Verwendung derartiger Zusatzelemente in den Radkästen moderner Kraftfahrzeuge oftmals nicht ausreichend Raum zwischen dem Reifen und der Karosserie oder Fahrwerksteilen vorhanden ist.

Diese Probleme hat man im Stand der Technik durch die Verwendung gedrehter anstelle gerader Kettenglieder zu lösen versucht, wie die AT 511 844 A4 zeigt. Die gedrehten Kettenglieder sind jedoch in der Fertigung teuer. Ihre Verschleißfestigkeit ist zudem nicht so hoch wie die von Rundstahl- oder Profilstahlketten mit geraden Kettengliedern.

In der gattungsbildenden EP 1 327 537 A1 wird versucht dem konzentrierten Verschleiß von Schneeketten zu begegnen, indem die Kettenglieder auf der Seite der Auflagefläche abgeflacht sind. Dadurch können die Kettenglieder in einem 45° Winkel gegenüber der Oberfläche des Fahrzeugreifens angeordnet sein und gleichzeitig eine größere Auflagefläche bieten.

Eine gegenüber der Oberfläche des Fahrzeugreifens geneigte Anordnung der Kettenglieder ist in der DE 856 107 ebenfalls gezeigt. Um die Kettenglieder vor einer Abnutzung zu schützen, sind die Kettenglieder in einem Winkel von 45° oder weniger auf der Reifenoberfläche geneigt. Die sich im Bereich der Lauffläche befindlichen Kettenglieder weisen auf der von der Reifenoberfläche abgewandten Seite Verschleißringe auf.

Um den Verschleiß der Kettenglieder zu verringern, wird in der US 2,950,750 eine Gleitschutzkette verwendet, bei der ein Kettenstrang während der Fahrt auf einem festen Untergrund locker auf dem Fahrzeugreifen aufliegt und die Kettenglieder in einem gegenüber dem Fahrzeugreifen geneigten Winkel angeordnet sind. Bei der Fahrt auf einem losen Untergrund, wie zum Beispiel Schnee oder Schlamm, ist der Kettenstrang gespannt und die Kettenglieder sind abwechselnd parallel zur Lauffläche und senkrecht zur Lauffläche angeordnet.

Der Erfindung liegt in Anbetracht dieser Nachteile die Aufgabe zugrunde, eine belastbare, kostengünstige und verschleißfeste Gleitschutzkette zu schaffen, die auch bei modernen Kraftfahrzeugen mit nur geringen Montagespalten zwischen dem Fahrzeugreifen und der Karosserie des Fahrzeugs einsetzbar ist.

Diese Aufgabe wird bei der eingangs genannten Gleitschutzvorrichtung erfindungsgemäß dadurch gelöst, dass an einer Knotenstelle eine Mehrzahl von Verbindungsgliedern starr miteinander verbunden sind.

Diese Lösung ist einfach. Aufgrund der Schragenkreuz-förmigen Vororientierung der Kettenglieder des Kettenstranges gibt es keine stehenden und liegenden Kettenglieder mehr, sondern jedes Kettenglied stützt sich etwa gleich schräg auf der Reifenoberfläche ab. Durch diese Anordnung kommt jedes Kettenglied mit dem Untergrund in Kontakt, so dass sich der Verschleiß über sämtliche Kettenglieder verteilt und nicht mehr nur auf die stehenden Kettenglieder wie im Stand der Technik beschränkt ist. Die Vororientierung bewirkt also eine Drehung des Kettenstranges um seine Längsachse gegenüber einem Kettenstrang mit liegenden und stehenden Kettengliedern, was zudem die Höhe des Kettenstranges über der Reifenoberfläche im Vergleich zur Anordnung mit stehenden und liegenden Kettengliedern verringert. Schließlich kann zur Fertigung des Kettenstranges auf die bewährten, kostengünstigen, hoch belastbaren und standardisierten Rund- und Profilstahlketten zurückgegriffen werden, was die Herstellung der Gleitschutzvorrichtung verbilligt.

Ein weiterer Vorteil der erfindungsgemäßen Lösung ergibt sich insbesondere bei der Verwendung von Profilstahlketten mit beispielsweise einem D-förmigen, viereckigen oder anders zumindest teilweise polygonalen Querschnitt: Durch die schräge Auflage der Kettenglieder auf der Reifenoberfläche weisen die Kanten der Profilstahlkette radial auswärts und kommen besser mit dem Untergrund in Eingriff, als dies bei den herkömmlichen stehenden Kettengliedern der Fall ist, so dass die Traktion gegenüber der stehenden/liegenden Anordnung verbessert ist.

Die Erfindung kann durch die folgenden jeweils für sich vorteilhaften und beliebig miteinander kombinierbaren Merkmale weiter verbessert werden.

So kann sich gemäß einer vorteilhaften Ausgestaltung an wenigstens einem Ende des Kettenstrangs ein zumindest abschnittsweise in sich verdrehtes Verbindungsglied eingehängt sein. Die Verdrehung des Verbindungsgliedes stellt sicher, dass der darin eingehängte Kettenstrang mit seinen geraden Kettengliedern so um seine Längsachse bzw. relativ zur Reifenoberfläche gedreht ist, dass die aufeinanderfolgenden Kettenglieder in Form eines Schragenkreuzes auf der Oberfläche des Fahrzeugreifens aufliegen. Das Verbindungsglied kann um zwischen etwa 35° und etwa 55°, vorzugsweise um etwa 45°, verdreht sein.

Das Verbindungsglied kann bügel-, karabiner-, schäkel-, haken- oder ringförmig sein. Es kann den Kettenstrang an einen weiteren Kettenstrang ankoppeln oder mehrere Kettenstränge als Knotenstelle miteinander verbinden. Das Verbindungselement kann auch selbst in eine Knotenstelle des Laufnetzes eingehängt sein.

Beispielsweise kann ein Verbindungsglied zwischen dem Kettenstrang und einem Seitenstrang der Gleitschutzvorrichtung angeordnet sein, wobei sich ein Seitenstrang koaxial zum Fahrzeugreifen an dessen Außen- und/oder Innenseite erstrecken kann, um im Betrieb ein Abschälen der Gleitschutzvorrichtung vom Fahrzeugreifen zu verhindern.

Ist das Verbindungsglied beispielsweise ringförmig, so kann an dem Umfang des Ringes wenigstens ein Einhängeabschnitt ausgebildet sein, der durch eine Kröpfung des Ringes gebildet ist. An der Kröpfung kann beispielsweise der Ring in Richtung senkrecht zu der vom Ring aufgespannten Ebene und/oder der Oberfläche des Reifens vorspringen und einen Einhängeabschnitt bilden, der gegenüber dieser Ebene bzw. der Reifenoberfläche geneigt verläuft. Diese Neigung bewirkt automatisch eine korrekte Vororientierung der Kettenglieder des Kettenstranges, so dass sie schräg auf der Reifenoberfläche aufliegen. Um den Kettenstrang gegen ein Verrutschen aus dem Einhängeabschnitt zu sichern, kann der Einhängeabschnitt parallel zur Reifenoberfläche oder zur Ringebene bzw. radial auswärts vorgewölbt sein und/oder eine andere Krümmung aufweisen als benachbarte Abschnitte des Ringes.

Das Verbindungsglied kann in einer weiteren Ausgestaltung mehrere Eingängeabschnitte aufweisen und beispielsweise als Knotenstelle dienen, in der mehrere Kettenstränge, die in Form eines Schragenkreuzes auf der Reifenoberfläche aufliegen, eingehängt sind oder eingehängt werden können. Der Ring kann in einem solchen Fall einen senkrecht und/oder in seiner Ebene und/oder senkrecht zur Reifenoberfläche wellenförmig verlaufenden Rand aufweisen.

Der Ring kann eine Polygonform aufweisen und beispielsweise triangelförmig ausgestaltet sein. Die Anzahl der Ecken der Polygonform entspricht der Anzahl der in den Ring als Knotenstelle eingehängten Kettenstränge. Die Ecken bilden die Einhängeabschnitte und sind bevorzugt verdreht.

Eine Knotenstelle kann eine Mehrzahl von Verbindungsgliedern in Form von Bügeln, Karabinern, Schäkeln, Haken und/oder Ringgliedern aufweisen. Die Verbindungsglieder können gar monolithisch, insbesondere stoffschlüssig miteinander verbunden sein. An jeweils einem Verbindungsglied einer solchen Knotenstelle kann ein einzelner Kettenstrang angeordnet sein. Die Verbindungsglieder können in sich verdreht oder gerade ausgestaltet sein, wobei sie dann gegenüber der Reifenoberfläche gedreht sind. Letzteres kann beispielsweise erreicht werden, wenn das Verbindungsglied einen zentralen Bereich aufweist, von dem die einzelnen Haken und/oder Ringglieder vorspringen.

Die Kettengliedebenen der aufeinanderfolgenden Kettenglieder eines Kettenstranges und im Übrigen auch ein Einhängeabschnitt können zwischen etwa 35° und 55°, vorzugsweise um etwa 45° gegenüber der Oberfläche des Reifens geneigt sein. Auch bei einer Ausrichtung des Kettenstranges, in der theoretisch eine Neigung der Kettengliedebenen der aufeinanderfolgenden Kettenglieder um jeweils 45° erreicht wird, werden sich die Kettenglieder aufgrund des Spiels im Kettenstrang aufspreizen, so dass der Winkel zwischen unmittelbar aufeinanderfolgenden Kettengliedern größer als 90° betragen wird.

Mehrere sich schräg auf der Reifenoberfläche abstützende Kettenstränge können gemäß einer weiteren Ausgestaltung zu einem Laufnetz verknüpft sein, das bei montierter Gleitschutzvorrichtung auf der Reifenoberfläche, insbesondere aber auf der Lauffläche, aufliegt. Das Laufnetz kann polygonale Maschen aufweisen, bei denen wenigstens eine Seite von einem Schragenkreuz-förmig aufliegenden Kettenstrang gebildet ist.

Im Folgenden ist die Erfindung anhand von Figuren beispielhaft näher erläutert. Der Einfachheit halber werden in den Figuren für Elemente, die einander hinsichtlich Form und/oder Funktion entsprechen, dieselben Bezugszeichen verwendet.

Nach Maßgabe der obigen Ausführungen können die in den Figuren dargestellten Merkmalskombinationen abgewandelt werden. So kann auf ein in einer Figur gezeigtes Merkmal verzichtet werden, wenn es auf den mit diesem Merkmal verbundenen technischen Effekt bei einer bestimmten Anwendung nicht ankommen sollte. Umgekehrt kann zu einer Merkmalskombination einer Figur ein weiteres Merkmal hinzugefügt werden, wenn es auf dessen technischen Effekt bei einer bestimmten Anwendung der Erfindung ankommen sollte.

Es zeigen:
- Fig. 1: eine schematische Schnittdarstellung eines Kettenstranges einer Gleitschutzvorrichtung aus dem Stand der Technik;
- Fig. 2: eine schematische Schnittdarstellung eines Kettenstranges einer erfindungsgemäßen Gleitschutzvorrichtung;
- Fig. 3: eine schematische Perspektivdarstellung einer Knotenstelle einer erfindungsgemäßen Gleitschutzvorrichtung;
- Fig. 4: eine schematische Perspektivdarstellung einer weiteren Knotenstelle einer erfindungsgemäßen Gleitschutzvorrichtung;
- Fig. 5: eine schematische Perspektivdarstellung einer weiteren Knotenstelle einer erfindungsgemäßen Gleitschutzvorrichtung;
- Fig. 6: eine schematische Perspektivdarstellung einer weiteren Knotenstelle einer erfindungsgemäßen Gleitschutzvorrichtung;
- Fig. 7: eine schematische Perspektivdarstellung eines Verbindungsgliedes einer erfindungsgemäßen Gleitschutzvorrichtung;
- Fig. 8: eine schematische Perspektivdarstellung eines Teils einer erfindungsgemäßen Gleitschutzvorrichtung;
- Fig. 9: eine schematische Perspektivdarstellung eines Teils eines Laufnetzes einer erfindungsgemäßen Gleitschutzvorrichtung.

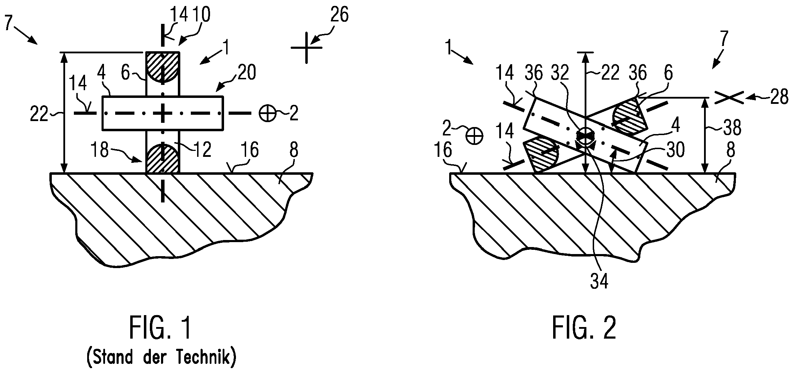

Zunächst wird die Erfindung anhand der Fig. 1 und 2 erläutert. Die beiden Figuren zeigen jeweils einen Kettenstrang 1 mit zwei in einer Längsrichtung 2 des Kettenstranges aufeinanderfolgenden Kettengliedern 4, 6. Die Kettenglieder 4, 6 sind bevorzugt Kettenglieder einer Rundstahlkette und/oder einer Profilstahlkette. Die Kettenglieder können insbesondere normierte Abmessungen aufweisen.

Der Kettenstrang 1 ist Bestandteil einer in Fig. 1 und 2 nicht dargestellten Gleitschutzvorrichtung 7 für Fahrzeugreifen, wie einer Schnee-, Schlamm- oder Forstkette.

Bei den Gleitschutzvorrichtungen aus dem Stand der Technik sind die Kettenstränge 1 so eingehängt, dass sie die in Fig. 1 dargestellte Vororientierung gegenüber dem Fahrzeugreifen 8 aufweisen.

Demnach weist der Kettenstrang 1 stehende Kettenglieder 10 auf, bei denen eine vom Kettenglied 10 bzw. dessen Öffnung 12 aufgespannte Kettengliedebene 14 im Wesentlichen senkrecht zur Oberfläche 16 des Fahrzeugreifens 8 verläuft. Das stehende Kettenglied 10 liegt folglich mit seinem einen Schenkel 18 auf der Oberfläche 16 auf. Die Oberfläche 16 kann eine Lauffläche, auf der der Fahrzeugreifen 8 im Betrieb abrollt, oder eine nach außen oder innen weisende Reifenflanke des Fahrzeugreifens sein.

Zwischen zwei aufeinanderfolgenden stehenden Kettengliedern 10 befindet sich jeweils ein liegendes Kettenglied 20, dessen Kettengliedebene 14 im Wesentlichen parallel zur Oberfläche 16 verläuft.

Wie Fig. 1 zeigt, wird die Höhe 22 des Kettenstranges 1 über der Oberfläche 16 durch die Breite des stehenden Kettengliedes 10 bestimmt. Außerdem kommt im Betrieb aufgrund der Vororientierung des Kettenstranges 1 bei den herkömmlichen Kettensträngen 1 gemäß Fig. 1 stets, auch wenn die Gleitschutzvorrichtung 7 gewendet wird, nur das stehende Kettenglied 10 in Eingriff mit dem Untergrund, so dass es sich stärker abnutzt.

In seiner Längsrichtung 2 betrachtet bildet der Kettenstrang 1 aus dem Stand der Technik also ein stehendes Kreuz 26.

Nach der Erfindung wird dem Kettenstrang 1 durch seine Anbindung an den Rest der Gleitschutzvorrichtung eine Vororientierung gegeben, so dass er von Beginn an in Form eines Schragenkreuzes 28 auf der Oberfläche 16 des Fahrzeugreifens 8 aufliegt.

Beim erfindungsgemäßen Kettenstrang 1 liegen also aufeinanderfolgende Kettenglieder 4, 6 geneigt auf der Oberfläche 16 des Fahrzeugreifens 8 auf. Der Winkel 30, den die Kettengliedebenen 14 unmittelbar aufeinanderfolgender Kettenglieder 4, 6 mit der Oberfläche 16 einschließen, ist jeweils in etwa gleich. Auf der zum Kettenstrang 1 hinweisenden Seite beträgt der Winkel 30 aufgrund des relativen Spiels der Kettenglieder 4, 6 zueinander bezüglich einer Rotation um die Längsachse 32 des Kettenstranges 1 jeweils etwa höchstens 45°. Die unmittelbar aufeinanderfolgenden Kettenglieder stützen sich stabil aneinander ab und schließen zur Oberfläche 16 hin einen Winkel 34 mit ihren Kettengliedebenen 14 ein, der größer als 90° ist.

Durch das gegenseitige Abstützen der Kettenglieder 4, 6 ist die in Fig. 2 dargestellte Position auf der Oberfläche 16 von dem Kettenstrang 1 stabil eingenommen. Durch die Schrägstellung im Winkel 30 gegenüber der Oberfläche 16 kommen insbesondere bei der Verwendung von Profilstahlketten, beispielsweise Profilstahlketten mit D-förmigen oder viereckigem Querschnitt, die Kanten 36 in eine weg von der Oberfläche 16 weisende, außen liegende Position. Sie sind daher in eine günstigere Lage für eine Traktionserhöhung gebracht, als dies bei der herkömmlichen Vororientierung des Kettenstranges 1 gemäß Fig. 1 der Fall ist.

Durch das Spiel der Kettenglieder 4, 6 relativ zueinander und die geneigte Ausrichtung der Kettengliedebenen 14 gegenüber der Reifenoberfläche 16 ist trotz verbesserter Traktionseigenschaften die Höhe 38 des Schragenkreuz-förmig aufliegenden Kettenstranges 1 der Fig. 2 gegenüber der Höhe 22 des Kettenstranges 1 der Fig. 1 verringert.

Durch die schräge Vororientierung des Kettenstranges 1 der Fig. 2 wird beim Abrollen des Fahrzeugreifens 8 gleichmäßig jedes Kettenglied mit dem Untergrund in Kontakt gebracht, so dass sich der Verschleiß über eine größere Kettenfläche verteilt. Auch wenn die Gleitschutzvorrichtung 7 gewendet wird, gelangen stets sämtliche Kettenglieder 4, 6 in Eingriff mit dem Untergrund.

Die Vororientierung des Kettenstranges 1 in der in Fig. 2 dargestellten Lage lässt sich durch ein Verbindungsglied 40 erreichen, das in wenigstens ein Ende eines Kettenstranges 1 aus geraden Kettengliedern 4, 6 eingehängt ist.

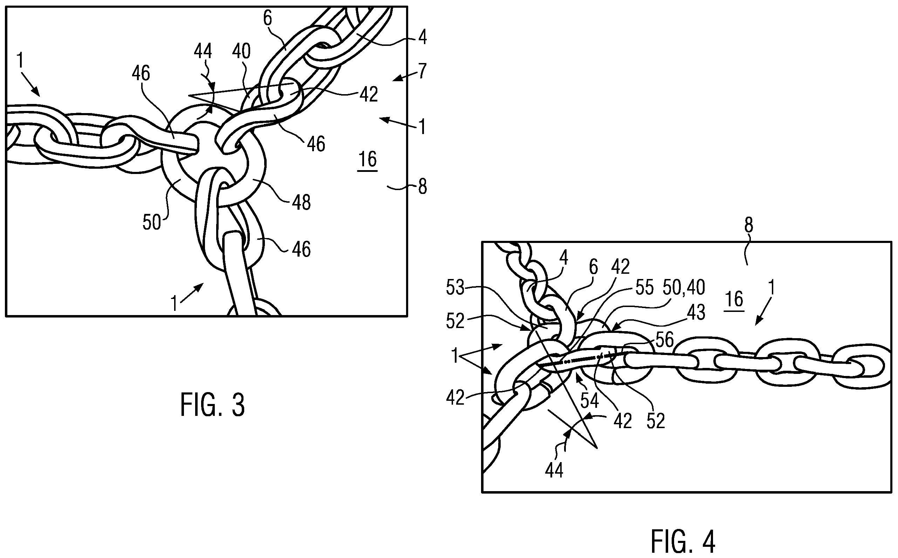

In den Fig. 3 bis 7 sind mögliche Ausgestaltungen eines solchen Verbindungsgliedes 40 gezeigt. Eine Gleitschutzvorrichtung 7 kann jeweils nur eine einzige oder aber eine beliebige Kombination dieser Verbindungsglieder 40 aufweisen. Das Verbindungsglied 40 ist, wie die Fig. 3 bis 6 übereinstimmend zeigen, verdreht ausgestaltet.

Das Verbindungsglied 40 weist bevorzugt wenigstens einen Einhängeabschnitt 42 auf, in den ein Kettenstrang 1 eingehängt ist. Der Einhängeabschnitt 42 ist bei montierter Gleitschutzvorrichtung gegenüber der Oberfläche 16 des Fahrzeugreifens in einem Winkel 44 angeordnet, der zwischen 35° bis etwa 55°, bevorzugt um die 45°, beträgt. Bei montierter Gleitschutzvorrichtung liegt das Verbindungsglied 40 bevorzugt zumindest abschnittsweise auf der Oberfläche 16 auf.

Das Verbindungsglied 40 kann, wenn es beispielsweise als Knotenstelle 50 einer Gleitschutzvorrichtung 7 dient, mehrere Kettenstränge 1 aufnehmen. Bevorzugt ist dann jedem Kettenstrang 1 ein Einhängeabschnitt 42 zugeordnet. Damit die Kettenstränge 1 in ihrem jeweiligen Einhängeabschnitt 42 sicher gehalten sind, können die Einhängeabschnitte 42 Ausbuchtungen 43 aufweisen, die von einem Zentrum des Verbindungsgliedes 40 weg vorspringen.

In Fig. 3 ist gezeigt, dass das Verbindungsglied 40 in Form eines bevorzugt einzelnen verdrehten Kettengliedes 46 aus Rund- oder Profilstahl ausgestaltet sein kann. Ein derartig ausgestaltetes Verbindungsglied 40 erlaubt die Verwendung von beispielsweise herkömmlichen planen Ringen 48 als Knotenstelle 50. In diese Knotenstelle werden einfach mehrere Verbindungsglieder 40 mit den daran gehängten Kettensträngen 1 eingehängt. Neben der Verwendung einfacher Ringe 48 bietet diese Ausgestaltung den weiten Vorteil, dass die Vororientierung des Kettenstranges 1 unabhängig davon gleich bleibt, wo sich das Verbindungsglied 40 am Ring 48 befindet.

Wie Fig. 4 zeigt, kann anstelle des ebenen Ringes 48 ein verdrehter bzw. wellenförmiger Ring 52 in Triangelform als Knotenstelle 50 für drei Kettenstränge 1 verwendet werden. Der verdrehte Ring 52 weist über seinen Umfang 53 eine Wellenform 54 auf, die sich aus senkrecht zur Ringebene 56 verlaufenden Kröpfungen 55 zusammensetzt. Im Bereich dieser Kröpfungen 55 befinden sich jeweils die Einhängeabschnitte 42, die im Winkel 44 zur Oberfläche 16 des Reifens 8 verlaufen und die Vororientierung des Kettenstranges 1 sicherstellen.

In einem derartig in sich verdrehten Ring 52 als Verbindungsglied 40 kann eine der Anzahl der Einhängeabschnitte 42 entsprechende Anzahl von geraden Kettensträngen 1 direkt eingehängt werden. Verdrehte Verbindungsglieder sind nicht mehr nötig.

Um die Kettenstränge 1 sicheres in Position zu halten, kann der verdrehte Ring 52, wie im übrigen auch der gerade Ring 48, Abweichungen von der Kreisform aufweisen. Beispielsweise kann ein Ring 48, 52 als Knotenstelle 50 für drei Kettenstränge 1 eine Triangel- oder Dreiecksform, also drei Ausbuchtungen, aufweisen, wobei die an den Eckstellen gelegenen Abschnitte die Einhängeabschnitte 42 bilden und gegenüber der Oberfläche 16 verdreht sind. Entsprechend der Anzahl der Kettenstränge 1 in der Knotenstelle 50 kann der Ring 48, 52 eine entsprechend polygonale Grundstruktur aufweisen.

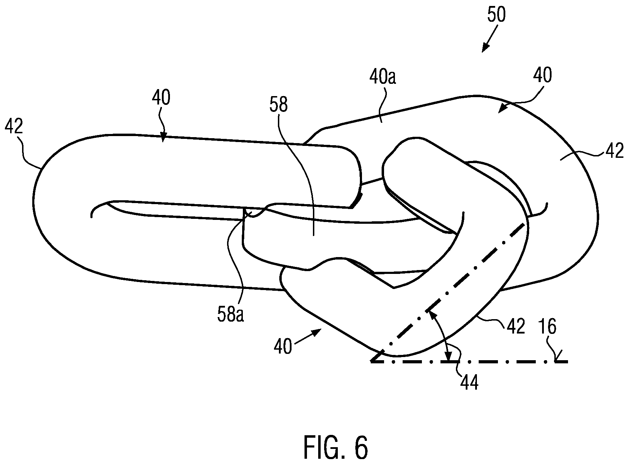

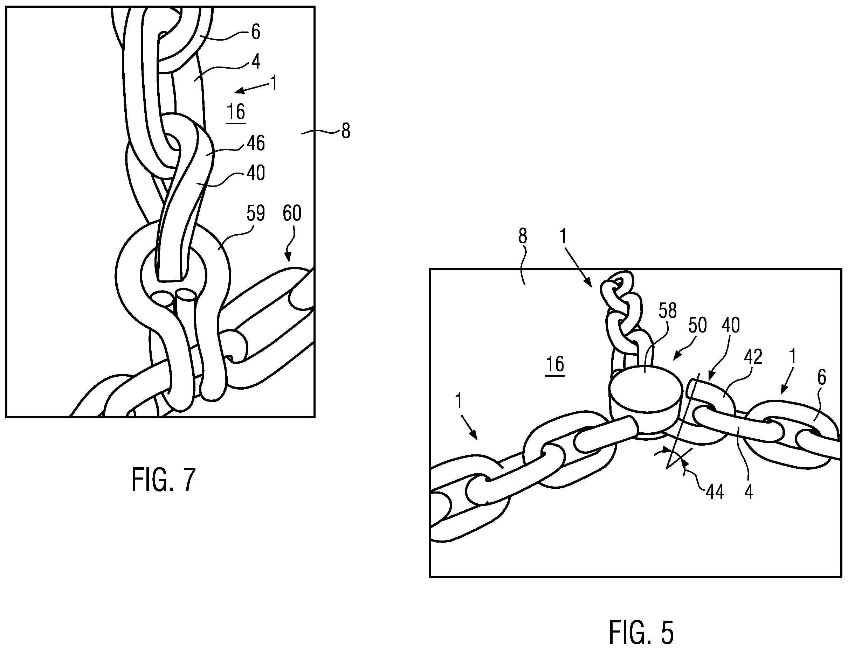

Anstelle einer ringförmigen Ausgestaltung, oder zusätzlich hierzu, kann eine Knotenstelle 50 eine Mehrzahl von kettenglied-, haken- oder ringförmigen Einhängeabschnitten 42 aufweisen, wie dies schematisch in Fig. 5 und 6 dargestellt ist. Die Haken- oder Ringform dient lediglich der Erörterung. Es können auch schäkel- oder karabinerförmige Einhängeglieder 42 zum Einsatz gelangen. Wie Fig. 5 zeigt, ist wieder jeder Einhängeabschnitt 42 gegenüber der Oberfläche 16 im Winkel 44 geneigt angeordnet, damit Kettenstränge 1 aus geraden Kettengliedern 4, 6 direkt in die Knotenstelle 1 eingehängt werden können. Die einzelnen Einhängeabschnitte 42 erstrecken sich sternförmig weg von einem gemeinsamen Zentrum 58 der Knotenstelle 50.

In Fig. 6 ist eine Knotenstelle 50 gezeigt, bei der das Zentrum 58 scheibenförmig ausgestaltet ist. Das Zentrum 58 weist beispielsweise eingestanzte und/oder eingeprägte Aufnahmen 58a für die Verbindungsglieder 40 auf. Die Aufnahmen 58 nehmen jeweils einen Schenkel 40a eines Verbindungsgliedes 40 im Winkel 44 vororientiert auf. Ein Verbindungsglied 40 ist dabei in Form eines offenen Profil- oder Rundstahlkettengliedes ausgestaltet, das in die Aufnahmen 58a eingelegt ist und dadurch seine Vororientierung im Winkel 44 erhält. An dem scheibenförmigen Zentrum 58 können die Verbindungsglieder 40 der Fig. 6 angeschweißt sein.

In Fig. 7 ist gezeigt, dass der Kettenstrang 1 mittelbar über ein Verbindungsglied 40 mit einem Seitenstrang der Gleitschutzvorrichtung 3 verbunden sein kann. Das Verbindungsglied 40 kann als verdrehtes Kettenglied 46 ausgestaltet sein und in einen Haken 59, der in einen weiteren Kettenstrang 60, beispielsweise einen Seitenstrang, eingehängt ist, verbunden sein. Alternativ zu der in Fig. 7 dargestellten Ausgestaltung kann auch der Haken 59 in sich verdreht sein, um dem Kettenstrang 1 die zu Schragenkreuz-förmige Auflage auf der Oberfläche 16 notwendige Vororientierung zu geben. In diesem Fall kann der Kettenstrang 1 unmittelbar in den Haken 59 eingehängt werden.

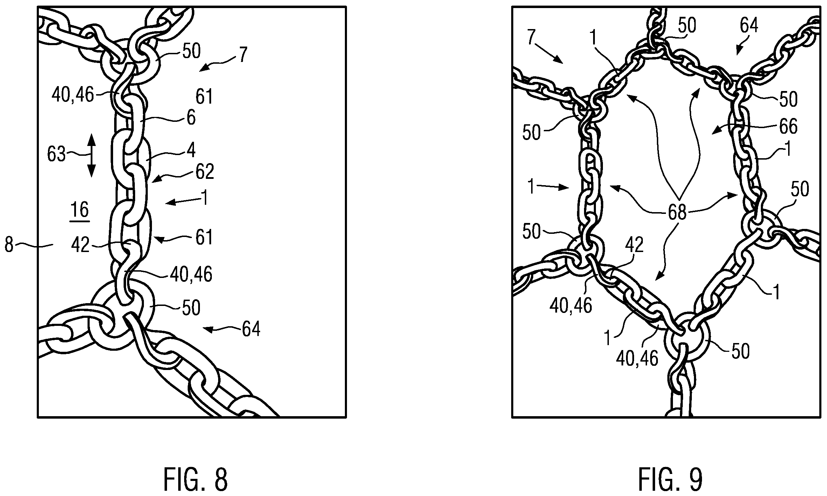

In Fig. 8 ist zu erkennen, dass der Kettenstrang 1 aus geraden Kettengliedern 4, 6 an seinen beiden Enden 61 in Verbindungsglieder 40 eingehängt sein kann, die eine Schragenkreuz-förmige Vororientierung des Kettenstranges 1 relativ zur Oberfläche 16 sicherstellt. In Fig. 8 ist beispielhaft ein Spurstrang 62 der Gleitschutzvorrichtung gezeigt. Der Spurstrang 62 erstreckt sich bei auf dem Fahrzeugreifen 8 montierter Gleitschutzvorrichtung in Umfangsrichtung 63 des Fahrzeugreifens 8 und liegt vollständig auf der Lauffläche des Reifens auf.

Die Gleitschutzvorrichtung 7 kann gemäß Fig. 9 ein Laufnetz 64 aufweisen, das polygonale, beispielsweise 4-, 5- oder 6-eckige, Maschen 66 aufweist, von denen wenigstens eine, bevorzugt alle Seiten 68 von geraden Kettensträngen 1 mit Schragenkreuz-förmiger Vororientierung gebildet sind. Die Kettenstränge 1 einer Masche sind über Knotenstellen 50 miteinander verbunden, wobei sie entweder unmittelbar in eine verdreht ausgestaltete Knotenstelle oder mittelbar über ein verdrehtes Verbindungsglied, beispielsweise in Form eines verdrehten Kettengliedes mit der Knotenstelle 50 verbunden sind.

### Bezugszeichen:

- 1: Kettenstrang
- 2: Längsrichtung des Kettenstrangs
- 4: Kettenglied
- 6: Kettenglied
- 7: Gleitschutzvorrichtung
- 8: Fahrzeugreifen
- 10: stehendes Kettenglied
- 12: Öffnung eines Kettengliedes
- 14: Kettengliedebene
- 16: Oberfläche des Fahrzeugreifens
- 18: Schenkel eines Kettenglieds
- 20: liegendes Kettenglied
- 22: Höhe des Kettenstrangs über der Reifenoberfläche
- 26: stehendes Kreuz
- 28: Schragenkreuz
- 30: Winkel zwischen Reifenoberfläche und Kettengliedebene
- 32: Längsachse des Kettenstrangs
- 34: Winkel zwischen den Kettengliedebenen zweier unmittelbar aufeinanderfolgender Kettenglieder
- 36: Kante eines Kettengliedes
- 38: Höhe des Schragenkreuz-förmigen Kettenstranges über der Reifenoberfläche
- 40: Verbindungsglied
- 40a: Schenkel eines Verbindungsgliedes
- 42: Einhängeabschnitt
- 43: Ausbuchtung des Einhängegliedes
- 44: Winkel zwischen Einhängeabschnitt und Reifenoberfläche
- 46: verdrehtes Kettenglied
- 48: gerader Ring
- 50: Knotenstelle
- 52: verdrehter Ring
- 53: Umfang des Ringes
- 54: Wellenform
- 55: Kröpfung
- 56: Ringebene
- 58: Zentrum einer Knotenstelle
- 58a: Aufnahme einer Knotenstelle
- 59: Haken
- 60: weiterer Kettenstrang
- 61: Ende des Kettenstranges
- 62: Spurstrang einer Gleitschutzvorrichtung
- 63: Umfangsrichtung des Fahrzeugreifens
- 64: Laufnetz einer Gleitschutzvorrichtung
- 66: Masche eines Laufnetzes
- 68: Seite einer Masche

## Patentansprüche

1. Gleitschutzvorrichtung (7) für Fahrzeugreifen (8), mit wenigstens einem Kettenstrang (1) aus einer Profil- oder einer Rundstahlkette, wobei der Kettenstrang (1) aus geraden Kettengliedern (4, 6) besteht und bei auf dem Fahrzeugreifen (8) montierter Gleitschutzvorrichtung (1) auf einer Oberfläche (16) des Fahrzeugreifens aufliegt, wobei der Kettenstrang (1) bei auf dem Fahrzeugreifen montierter Gleitschutzvorrichtung (7) an wenigstens einem seiner Enden (60) in einer bezüglich der Oberfläche (16) des Fahrzeugreifens (8) Schragenkreuz-förmigen Vororientierung mittelbar oder unmittelbar mit wenigstens einem Verbindungsglied (40) in eine Knotenstelle (50) der übrigen Gleitschutzvorrichtung (7) eingehängt ist, **dadurch gekennzeichnet, dass** eine Mehrzahl von Verbindungsgliedern (40) an einer Knotenstelle (50) starr miteinander verbunden sind.

2. Gleitschutzvorrichtung (7) nach Anspruch 1, **dadurch gekennzeichnet, dass** an dem wenigstens einen Ende (60) des Kettenstranges (1) ein zumindest abschnittsweise in sich verdrehtes Verbindungsglied (40) eingehängt ist.

3. Gleitschutzvorrichtung (7) nach Anspruch 1 oder 2, **dadurch gekennzeichnet, dass** die Knotenstelle (50) ein Zentrum (58) mit eingestanzten und/oder eingeprägten Aufnahmen (58a) für die Verbindungsglieder (40) aufweist.

4. Gleitschutzvorrichtung nach einem der Ansprüche 1 bis 3, **dadurch gekennzeichnet, dass** ein Verbindungsglied (40) einen in einem gegenüber der Oberfläche (16) des Fahrzeugreifens (8) geneigten Winkel (44) angeordneten Einhängeabschnitt (42) aufweist.

5. Gleitschutzvorrichtung (7) nach einem der Ansprüche 1 bis 4, **dadurch gekennzeichnet, dass** die Verbindungsglieder (40) an einer Knotenstelle (50) stoffschlüssig miteinander verbunden sind.

6. Gleitschutzvorrichtung (7) nach einem der Ansprüche 1 bis 5, **dadurch gekennzeichnet, dass** sich an beiden Enden (61) des Kettenstranges (1) ein in sich verdrehtes Verbindungsglied (40) befindet.

7. Gleitschutzvorrichtung (7) nach einem der Ansprüche 1 bis 6, **dadurch gekennzeichnet, dass** das Verbindungsglied (40) die Form eines Ringes (52) aufweist, an dessen Umfang (53) wenigstens ein gekröpfter Einhängeabschnitt (42) ausgebildet ist, wobei der Einhängeabschnitt (42) bei auf dem Fahrzeugreifen (8) montierter Gleitschutzvorrichtung (7) in einem Winkel (44) geneigt zur Oberfläche (16) des Fahrzeugreifens (8) verläuft.

8. Gleitschutzvorrichtung (7) nach Anspruch 7, **dadurch gekennzeichnet, dass** der Winkel (44) zwischen 35° und 55° beträgt.

9. Gleitschutzvorrichtung (7) nach einem der Ansprüche 1 bis 8, **dadurch gekennzeichnet, dass** die Knotenstelle (50) eine Mehrzahl von karabiner-, schäkel-, kettenglied-, haken- oder ringförmigen Einhängeabschnitten (42) aufweist.

10. Gleitschutzvorrichtung (7) nach Anspruch 9, **dadurch gekennzeichnet, dass** in jedem Einhängeabschnitt (42) ein Kettenstrang (1) eingehängt ist.

11. Gleitschutzvorrichtung (7) nach Anspruch 9 oder 10, **dadurch gekennzeichnet, dass** die Einhängeabschnitte (42) sternförmig angeordnet sind.

12. Gleitschutzvorrichtung (7) nach einem der Ansprüche 1 bis 11, **dadurch gekennzeichnet, dass** bei auf einem Fahrzeugreifen (8) montierter Gleitschutzvorrichtung (7) sich wenigstens ein Kettenstrang (1) mit Schragenkreuz-förmiger Vororientierung auf der Oberfläche (16) des Fahrzeugreifens (8) von einer Lauffläche des Fahrzeugreifens (8) bis zu einer Reifenflanke des Fahrzeugreifens (8) erstreckt.

## Claims

1. Anti-skid device (7) for vehicle tyres (8), comprising at least one chain strand (1) made of a profiled steel chain or a round steel chain, the chain strand (1) consisting of straight chain links (4, 6) and resting against a surface (16) of the vehicle tyre when the anti-skid device (1) is mounted on the vehicle tyre (8), at least one end (60) of the chain strand (1) being directly or indirectly attached, when the anti-skid device (7) is mounted on the vehicle tyre, via at least one connection member (40) to a junction point (50) of the rest of the anti-skid device (7) in a preliminary orientation that is saltire-shaped with respect to the surface (16) of the vehicle tyre (8), **characterised in that** a plurality of connection members (40) are rigidly connected to one another at a junction point (50).

2. Anti-skid device (7) according to claim 1, **characterised in that** a connection member (40) that is twisted at least in portions is attached to the at least one end (60) of the chain strand (1).

3. Anti-skid device (7) according to either claim 1 or claim 2, **characterised in that** the junction point (50) has a centre (58) that has punched and/or stamped recesses (58a) for the connection members (40).

4. Anti-skid device according to any of claims 1 to 3, **characterised in that** one connection member (40) comprises an attachment portion (42) arranged at an angle (44) that is inclined with respect to the surface (16) of the vehicle tyre (8).

5. Anti-skid device (7) according to any of claims 1 to 4, **characterised in that** the connection members (40) are bonded to one another at a junction point (50).

6. Anti-skid device (7) according to any of claims 1 to 5, **characterised in that** a twisted connection member (40) is located at both ends (61) of the chain strand (1).

7. Anti-skid device (7) according to any of claims 1 to 6, **characterised in that** the connection member (40) is in the form of a ring (52) on the periphery (53) of which at least one cranked attachment portion (42) is formed, the attachment portion (42) extending at an angle (44) that is inclined with respect to the surface (16) of the vehicle tyre (8) when the anti-skid device (7) is mounted on the vehicle tyre (8).

8. Anti-skid device (7) according to claim 7, **characterised in that** the angle (44) is between 35° and 55°.

9. Anti-skid device (7) according to any of claims 1 to 8, **characterised in that** the junction point (50) comprises a plurality of carabiner-shaped, shackle-shaped, chain-link-shaped, hook-shaped or ring-shaped attachment portions (42).

10. Anti-skid device (7) according to claim 9, **characterised in that** a chain strand (1) is attached to each attachment portion (42).

11. Anti-skid device (7) according to either claim 9 or claim 10, **characterised in that** the attachment portions (42) are arranged in the shape of a star.

12. Anti-skid device (7) according to any of claims 1 to 11, **characterised in that**, when the anti-skid device (7) is mounted on the vehicle tyre (8), at least one chain strand (1) having a saltire-shaped preliminary orientation on the surface (16) of the vehicle tyre (8) extends from a tread of the vehicle tyre (8) as far as a tyre shoulder of the vehicle tyre (8).

## Revendications

1. Dispositif antidérapant (7) pour pneumatiques de véhicule (8), comprenant au moins un brin de chaine (1) constitué d'une chaine d'acier rond ou profilé, le brin de chaine (1) étant constitué de maillons de chaine droits (4, 6) et reposant sur une surface (16) du pneumatique de véhicule lorsque le dispositif antidérapant (7) est monté sur le pneumatique de véhicule (8), et le brin de chaine (1) étant accroché, lorsque le dispositif antidérapant (7) est monté sur le pneumatique de véhicule, à au moins une de ses extrémités (60) et selon une pré-orientation en forme de croix oblique ou en X par rapport à la surface (16) du pneumatique de véhicule (8), à un point de noeud (50) du restant du dispositif antidérapant (7), directement ou indirectement à l'aide d'au moins un organe de liaison (40), **caractérisé en ce qu'**une pluralité d'organes de liaison (40) sont reliés mutuellement de manière rigide au niveau d'un point de noeud (50).

2. Dispositif antidérapant (7) selon la revendication 1, **caractérisé en ce qu'**à ladite au moins une extrémité (60) du brin de chaine (1) est accroché un organe de liaison (40) au moins en partie torsadé en soi.

3. Dispositif antidérapant (7) selon la revendication 1 ou la revendication 2, **caractérisé en ce que** le point de noeud (50) présente une partie centrale (58) avec des logements d'accueil (58a), qui y sont réalisés par matriçage et/ou estampage, et sont destinés aux organes de liaison (40).

4. Dispositif antidérapant selon l'une des revendications 1 à 3, **caractérisé en ce qu'**un organe de liaison (40) présente un tronçon d'accrochage (42) agencé selon un angle d'inclinaison (44) par rapport à la surface (16) du pneumatique de véhicule (8).

5. Dispositif antidérapant (7) selon l'une des revendications 1 à 4, **caractérisé en ce que** les organes de liaison (40) sont reliés mutuellement, par continuité de matière, au niveau d'un point de noeud (50).

6. Dispositif antidérapant (7) selon l'une des revendications 1 à 5, **caractérisé en ce qu'**aux deux extrémités (61) du brin de chaine (1), se trouve un organe de liaison (40) torsadé en soi.

7. Dispositif antidérapant (7) selon l'une des revendications 1 à 6, **caractérisé en ce que** l'organe de liaison (40) présente la forme d'un anneau (52) à la périphérie (53) duquel est formé au moins un tronçon d'accrochage (42) coudé, le tronçon d'accrochage (42) s'étendant de manière inclinée d'un angle (44) par rapport à la surface (16) du pneumatique de véhicule (8) lorsque le dispositif antidérapant (7) est monté sur le pneumatique de véhicule (8).

8. Dispositif antidérapant (7) selon la revendication 7, **caractérisé en ce que** l'angle (44) a une valeur se situant entre 35° et 55°.

9. Dispositif antidérapant (7) selon l'une des revendications 1 à 8, **caractérisé en ce que** la point de noeud (50) présente une pluralité de tronçons d'accrochage (42) en forme de mousqueton, de manille, de maillon de chaine, de crochet ou d'anneau.

10. Dispositif antidérapant (7) selon la revendication 9, **caractérisé en ce que** dans chaque tronçon d'accrochage (42) est accroché un brin de chaine (1).

11. Dispositif antidérapant (7) selon la revendication 9 ou la revendication 10, **caractérisé en ce que** les tronçons d'accrochage (42) sont agencés selon une disposition en forme d'étoile.

12. Dispositif antidérapant (7) selon l'une des revendications 1 à 11, **caractérisé en ce que** lorsque le dispositif antidérapant (7) est monté sur un pneumatique de véhicule (8), au moins un brin de chaine (1) s'étend selon une pré-orientation en forme de croix oblique ou en X par rapport à la surface (16) du pneumatique de véhicule (8), d'une surface de roulement du pneumatique de véhicule (8) jusqu'à un flanc de pneumatique du pneumatique de véhicule (8).
